# EUROPEAN PATENT APPLICATION

(11) **EP 4 516 860 A1**
(43) Date of publication of application: **05.03.2025**
(21) Application number: 23795924.2
(22) Date of filing: 09.03.2023
(51) Int. Cl.: C08L 101/00, C08G 63/12, C08G 63/60, C08L 67/00, C08L 67/02, C08L 101/16

(54) **BIODEGRADABLE RESIN DEGRADATION ACCELERATOR, BIODEGRADABLE RESIN COMPOSITION, MOLDED BODY, AND METHOD FOR DEGRADING BIODEGRADABLE RESIN**

(30) Priority: 28.04.2022 JP 2022074414
(71) Applicant: DIC Corporation, Tokyo 174-8520 (JP)
(72) Inventor: TAKAHASHI, Akinori, Ichihara-shi, Chiba 290-8585 (JP); MIURA, Yurika, Ichihara-shi, Chiba 290-8585 (JP); TOKORO, Hiroki, Ichihara-shi, Chiba 290-8585 (JP)
(74) Representative: Kraus & Lederer PartGmbB
(86) International application number: PCT/JP2023/008948
(87) International publication number: WO 2023/210177

(57) **Abstract**

Provided is a biodegradability accelerator which improves a biodegradable resin in biodegradability. Specifically, provided is a biodegradable resin degradation accelerator which is a polyester having a repeating unit represented by the following general formula (A) and a repeating unit represented by the following general formula (G), or a polyester having a repeating unit represented by the following general formula (L), a repeating unit represented by the following general formula (A), and a repeating unit represented by the following general formula (G), wherein the polyester has a carboxyl group at at least one end thereof.

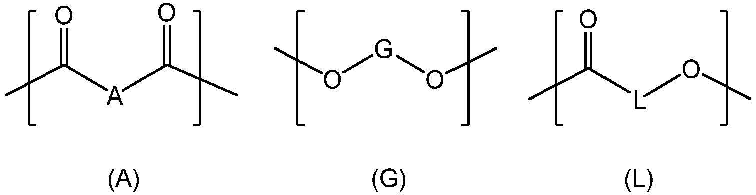

## Description

### TECHNICAL FIELD

The present invention relates to a biodegradable resin degradation accelerator, a biodegradable resin composition, a molded article, and a method for degrading a biodegradable resin.

### BACKGROUND ART

General-purpose plastics, such as a vinyl chloride resin (PVC), are used in a wide variety of applications, but the general-purpose plastics are unlikely to be decomposed, and therefore, from the viewpoint of the importance of "sustainability" in recent years, there is a trend towards switching from general-purpose plastics to a biodegradable resin.

The "biodegradable resin" means a resin that is degradable eventually into carbon dioxide and water due to microorganisms present in soil, water, the ocean, or the like, and it has been known that the biodegradable resin is biodegraded generally over a period of time of several months through several years.

Disposable containers made of a general-purpose plastic and the like used in retailing have an extremely short product cycle, and therefore, when the raw material for the disposable containers is changed from the general-purpose plastic to a biodegradable resin, the biodegradable resin is required to have an even shorter degradation cycle in respect of the biodegradability.

Degradation of a biodegradable resin can be accelerated when placed in an environment at a high temperature and at a high humidity, but, for achieving further acceleration of biodegradability, the development of an additive for improving the biodegradability of a biodegradable resin is being made (for example, PTLs 1 and 2).

### CITATION LIST

### PATENT LITERATURE

PTL 1: JP2022-21326A
PTL 2: JP2006-52257A

### SUMMARY OF INVENTION

### TECHNICAL PROBLEM

PTL 1 discloses a biodegradability accelerator containing xylose, and PTL 2 discloses a dibasic acid ester (ester compound corresponding to a dibasic acid having both ends capped by an alcohol) as a polylactic acid degradation accelerator, but both of them cannot achieve satisfactory biodegradability acceleration effect.

A task to be achieved by the invention is to provide a biodegradability accelerator which improves a biodegradable resin in biodegradability.

Another task to be achieved by the invention is to provide a biodegradable resin composition having improved biodegradability and a molded article thereof.

A still another task to be achieved by the invention is to provide a method for degrading a biodegradable resin, which can degrade the biodegradable resin in a reduced time.

### SOLUTION TO PROBLEM

The inventions have conducted extensive and intensive studies with a view toward solving the above-mentioned problems. As a result, it has been found that, by adding a polyester of a specific structure to a biodegradable resin, it is possible to improve the biodegradability of the biodegradable resin, and the invention has been completed.

In the invention, the following biodegradable resin degradation accelerator and the like can be provided.
1. A biodegradable resin degradation accelerator which is a polyester having a repeating unit represented by the following general formula (A) and a repeating unit represented by the following general formula (G), or a polyester having a repeating unit represented by the following general formula (L), a repeating unit represented by the following general formula (A), and a repeating unit represented by the following general formula (G), wherein the polyester has a carboxyl group at at least one end thereof: 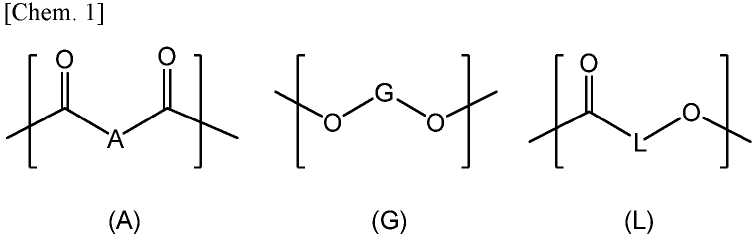 wherein, in the general formulae (A), (G), and (L),
   A is an aliphatic dibasic acid residue having 0 to 12 carbon atoms or an aromatic dibasic acid residue having 5 to 15 carbon atoms,
   G is an aliphatic diol residue having 2 to 12 carbon atoms, and
   L is a hydroxycarboxylic acid residue having 2 to 18 carbon atoms.
2. The biodegradable resin degradation accelerator according to item 1 above, wherein the polyester is a polyester represented by the following general formula (1) and/or a polyester represented by the following general formula (2): 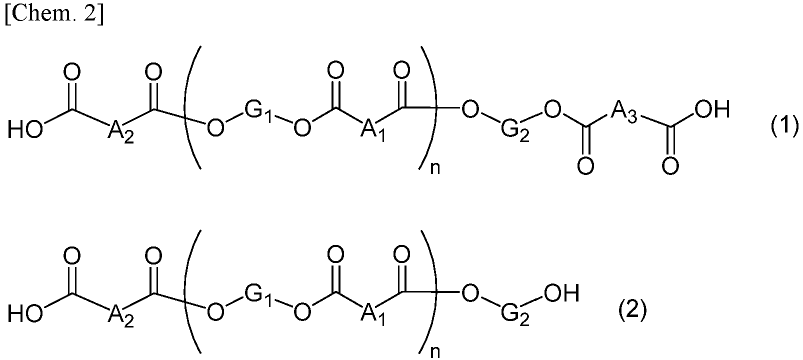 wherein, in the general formulae (1) and (2),
   each of A₁, A₂, and A₃ is independently an aliphatic dibasic acid residue having 0 to 12 carbon atoms or an aromatic dibasic acid residue having 5 to 15 carbon atoms,
   each of G₁ and G₂ is independently an aliphatic diol residue having 2 to 12 carbon atoms, and
   n represents the number of repeating units, and is an integer in the range of from 0 to 20,
   wherein A₁ and G₁ in a repeating unit in parentheses and those in another one are, respectively, the same or different.
3. The biodegradable resin degradation accelerator according to item 1 or 2 above, wherein the aliphatic diol residue having 2 to 12 carbon atoms is a linear aliphatic diol residue having 2 to 12 carbon atoms.
4. The biodegradable resin degradation accelerator according to any one of items 1 to 3 above, wherein the polyester is in a solid state at room temperature.
5. The biodegradable resin degradation accelerator according to any one of items 1 to 4 above, wherein the polyester has an acid value of 25 or more.
6. The biodegradable resin degradation accelerator according to any one of items 1 to 5 above, wherein the polyester has a number average molecular weight in the range of from 300 to 5,000.
7. A biodegradable resin composition comprising a biodegradable resin and the biodegradable resin degradation accelerator according to any one of items 1 to 6 above.
8. The biodegradable resin composition according to item 7 above, wherein the biodegradable resin is at least one member selected from the group consisting of polylactic acid, polybutylene succinate, polybutylene adipate terephthalate, polyhydroxybutyric acid-hydroxyhexanoic acid, polybutylene succinate adipate, and polyethylene terephthalate succinate.
9. The biodegradable resin composition according to item 7 or 8 above, which contains 1 to 250 parts by mass of the biodegradable resin degradation accelerator, relative to 100 parts by mass of the biodegradable resin.
10. A molded article of the biodegradable resin composition according to any one of items 7 to 9 above.
11. A method for degrading a biodegradable resin, comprising adding the biodegradable resin degradation accelerator according to any one of items 1 to 6 above to a biodegradable resin.

### ADVANTAGEOUS EFFECTS OF INVENTION

By the invention, there can be provided a biodegradability accelerator which improves a biodegradable resin in biodegradability.

By the invention, there can be provided a biodegradable resin composition having improved biodegradability and a molded article thereof.

By the invention, there can be provided a method for degrading a biodegradable resin, which can degrade the biodegradable resin in a reduced time.

### DESCRIPTION OF EMBODIMENTS

Hereinbelow, an embodiment of the invention will be described. The following embodiments should not be construed as limiting the scope of the invention, and the invention can be appropriately changed or modified as long as the effects of the invention can be obtained.

### [Biodegradable resin degradation accelerator]

The biodegradable resin degradation accelerator of the invention is a polyester having a repeating unit represented by the following general formula (A) and a repeating unit represented by the following general formula (G), or a polyester having a repeating unit represented by the following general formula (L), a repeating unit represented by the following general formula (A), and a repeating unit represented by the following general formula (G), wherein the polyester has a carboxyl group at at least one end thereof: 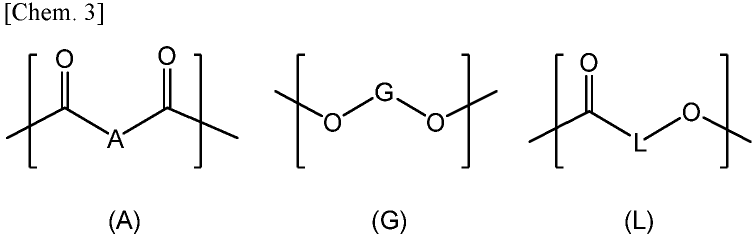 wherein, in the general formulae (A), (G), and (L),
A is an aliphatic dibasic acid residue having 0 to 12 carbon atoms or an aromatic dibasic acid residue having 5 to 15 carbon atoms,
G is an aliphatic diol residue having 2 to 12 carbon atoms, and
L is a hydroxycarboxylic acid residue having 2 to 18 carbon atoms.

The polyester which is the biodegradable resin degradation accelerator of the invention (hereinafter, frequently referred to as "the polyester of the invention") is presumed to be able to accelerate degradation of a biodegradable resin due to function of the polyester itself as an acid catalyst.

With respect to the system of polymerization of the polyester of the invention, there is no particular limitation, and the polyester may be a random copolymer comprising the above-mentioned repeating units, and may be a block copolymer comprising the above-mentioned repeating units.

The polyester of the invention is more preferably a polyester represented by the following general formula (1) and/or a polyester represented by the following general formula (2): 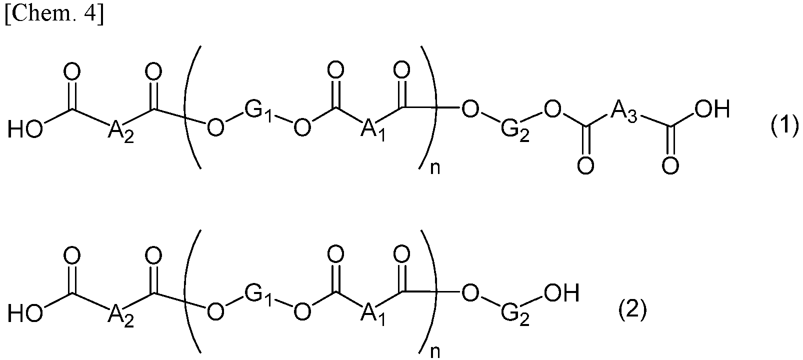 wherein, in the general formulae (1) and (2),
each of A₁, A₂, and A₃ is independently an aliphatic dibasic acid residue having 0 to 12 carbon atoms or an aromatic dibasic acid residue having 5 to 15 carbon atoms,
each of G₁ and G₂ is independently an aliphatic diol residue having 2 to 12 carbon atoms, and
n represents the number of repeating units, and is an integer in the range of from 0 to 20,
wherein A₁ and G₁ in a repeating unit in parentheses and those in another one are, respectively, the same or different.

In the invention, the term "dibasic acid residue" means a residual organic group obtained by removing a basic acid functional group from a dibasic acid. For example, when the dibasic acid residue is a dicarboxylic acid residue, the dicarboxylic acid residue indicates a residual organic group obtained by removing a carboxyl group from a dicarboxylic acid. The number of carbon atoms of the dicarboxylic acid residue does not include the number of carbon atom of the carboxyl group. Accordingly, for example, an oxalic acid residue is a dicarboxylic acid residue having 0 carbon atoms, and, in the oxalic acid residue, A₁, A₂, and A₃ are a single bond.

In the invention, the term "diol residue" means a residual organic group obtained by removing a hydroxyl group from a diol.

In the invention, the term "hydroxycarboxylic acid residue" means a residual organic group obtained by removing a hydroxyl group and a carboxyl group from a hydroxycarboxylic acid. The number of carbon atoms of the hydroxycarboxylic acid residue does not include the number of carbon atom of the carboxyl group.

The aliphatic dibasic acid residue having 0 to 12 carbon atoms for A, A₁, A₂, and A₃ may contain an alicyclic structure and/or an ether linkage (-O-).

The aliphatic dibasic acid residue having 0 to 12 carbon atoms for A, A₁, A₂, and A₃ is preferably an aliphatic dicarboxylic acid residue having 0 to 12 carbon atoms, and examples of the aliphatic dicarboxylic acid residues having 0 to 12 carbon atoms include an oxalic acid residue, a succinic acid residue, an adipic acid residue, a maleic acid residue, a pimelic acid residue, a suberic acid residue, an azelaic acid residue, a sebacic acid residue, a cyclohexanedicarboxylic acid residue, a dodecanedicarboxylic acid residue, and a hexahydrophthalic acid residue.

The aliphatic dibasic acid residue having 0 to 12 carbon atoms for A, A₁, A₂, and A₃ is preferably an aliphatic dicarboxylic acid residue having 2 to 12 carbon atoms, more preferably an aliphatic dicarboxylic acid residue having 2 to 10 carbon atoms, further preferably a succinic acid residue, a sebacic acid residue, a maleic acid residue, or an adipic acid residue, and especially preferably a succinic acid residue, a sebacic acid residue, or a maleic acid residue.

The aromatic ring of the aromatic dibasic acid residue having 5 to 15 carbon atoms for A, A₁, A₂, and A₃ includes those in which part of carbon atoms of the aromatic ring are replaced by a heteroatom. As examples of the aromatic rings in which part of carbon atoms of the aromatic ring are replaced by a heteroatom, there can be mentioned a furan ring, an imidazole ring, an oxazole ring, and the like.

The aromatic dibasic acid residue having 5 to 15 carbon atoms for A, A₁, A₂, and A₃ is preferably an aromatic dicarboxylic acid residue having 6 to 15 carbon atoms, and specific examples include a phthalic acid residue and a furandicarboxylic acid residue.

A, A₁, A₂, and A₃ are preferably an aliphatic dibasic acid residue having 2 to 12 carbon atoms, more preferably an aliphatic dicarboxylic acid residue having 2 to 12 carbon atoms, further preferably an aliphatic dicarboxylic acid residue having 2 to 10 carbon atoms.

In A₁, A₂, and A₃, it is preferred that A₁ and A₂ are different from each other and/or that A₁ and A₃ are different from each other.

With respect to the aliphatic diol residue having 2 to 12 carbon atoms for G, G₁, and G₂, examples include an ethylene glycol residue, a 1,2-propylene glycol residue, a 1,3-propylene glycol residue, a 1,2-propanediol residue, a 1,3-propanediol residue, a 1,2-butanediol residue, a 1,3-butanediol residue, a 2-methyl-1,3-propanediol residue, a 1,4-butanediol residue, a 1,5-pentanediol residue, a 2,2-dimethyl-1,3-propanediol (neopentyl glycol) residue, a 2,2-diethyl-1,3-propanediol (3,3-dimethylolpentane) residue, a 2-n-butyl-2-ethyl-1,3-propanediol (3,3-dimethylolheptane) residue, a 3-methyl-1,5-pentanediol residue, a 1,6-hexanediol residue, a 2,2,4-trimethyl-1,3-pentanediol residue, a 2-ethyl-1,3-hexanediol residue, a 2-methyl-1,8-octanediol residue, and a 1,9-nonanediol residue.

The aliphatic diol residue having 2 to 12 carbon atoms for G, G₁, and G₂ may contain an alicyclic structure and/or an ether linkage (-O-).

Examples of the aliphatic diol residues having 2 to 12 carbon atoms and containing an alicyclic structure include a 1,3-cyclopentanediol residue, a 1,2-cyclohexanediol residue, a 1,3-cyclohexanediol residue, a 1,4-cyclohexanediol residue, a 1,2-cyclohexanedimethanol residue, and a 1,4-cyclohexanedimethanol residue.

Examples of the aliphatic diol residues having 2 to 12 carbon atoms and containing an ether linkage include a diethylene glycol residue, a triethylene glycol residue, a tetraethylene glycol residue, a dipropylene glycol residue, and a tripropylene glycol residue.

The aliphatic diol residue having 2 to 12 carbon atoms for G, G₁, and G₂ is preferably an aliphatic diol residue having 3 to 8 carbon atoms, more preferably an ethylene glycol residue, a diethylene glycol residue, 1,3-propylene glycol, 1,6-hexanediol, or 1,4-butanediol.

When G, G₁, and G₂ are a linear aliphatic diol residue, the resultant accelerator can be improved in the compatibility with a biodegradable resin.

With respect to the hydroxycarboxylic acid residue having 2 to 18 carbon atoms for L, examples include hydroxycarboxylic acid residues corresponding to an aliphatic carboxylic acid having 3 to 19 carbon atoms and having the aliphatic chain substituted with one hydroxyl group, such as propionic acid, butyric acid, valeric acid, caproic acid, enanthic acid, capric acid, caprylic acid, undecylic acid, lauric acid, tridecylic acid, myristic acid, pentadecylic acid, palmitic acid, margaric acid, and stearic acid, and specific examples include a lactic acid residue, a 9-hydroxystearic acid residue, a 12-hydroxystearic acid residue, and a 6-hydroxycaproic acid residue.

L, i.e., the hydroxycarboxylic acid residue having 2 to 18 carbon atoms is preferably an aliphatic hydroxycarboxylic acid residue having 4 to 18 carbon atoms, more preferably a 12-hydroxystearic acid residue.

n, i.e., the number of repeating units is an integer in the range of from 0 to 20, preferably an integer in the range of from 1 to 20, more preferably an integer in the range of from 3 to 20, further preferably an integer in the range of from 5 to 20.

The polyester of the invention has a number average molecular weight (Mn), for example, in the range of from 100 to 6,000, preferably in the range of from 300 to 5,000, more preferably in the range of from 600 to 5,000, further preferably in the range of from 800 to 5,000, and especially preferably in the range of from 1,000 to 5,000.

The above-mentioned number average molecular weight (Mn) is a value as determined by a gel permeation chromatography (GPC) method using a conversion calibration curve obtained from the standard polystyrene, and is measured in accordance with the method described in the Examples.

The polyester of the invention has an acid value of, for example, 25 or more, preferably 27 or more, 30 or more, 40 or more, 50 or more, or more than 50 in this order.

With respect to the upper limit of the acid value of the polyester of the invention, there is no particular limitation, but the upper limit is, for example, 400 or less, preferably 250 or less, 200 or less, 150 or less, 120 or less, 100 or less, or 95 or less in this order.

The acid value of the polyester is measured by the method described in the Examples.

The polyester of the invention may have a hydroxyl value of, for example, 0 or more, preferably in the range of from 10 to 200, more preferably in the range of from 20 to 150, further preferably in the range of from 30 to 120.

The hydroxyl value of the polyester is measured by the method described in the Examples.

The properties of the polyester of the invention varies depending on the number average molecular weight and formulation of the polyester and the like, but is generally a liquid state, a solid state, a paste form, or the like at room temperature (25°C), preferably a solid state or a liquid state at room temperature (25°C), more preferably a solid state at room temperature (25°C).

The polyester of the invention is obtained using reaction raw materials containing an aliphatic dibasic acid and/or an aromatic dibasic acid, an aliphatic diol, and an optional hydroxycarboxylic acid. The term "reaction raw materials" herein means that the raw materials are those constituting the polyester of the invention and do not contain a solvent and a catalyst which do not constitute the polyester. Further, the term "optional hydroxycarboxylic acid" means that a hydroxycarboxylic acid may be used or may not be used.

With respect to the method for producing the polyester of the invention, there is no particular limitation, and the polyester can be produced by a known method or by the below-described method.

The reaction raw materials for the polyester of the invention contain an aliphatic dibasic acid and/or an aromatic dibasic acid, an aliphatic diol, and an optional hydroxycarboxylic acid, and may contain another raw material.

In the reaction raw materials for the polyester of the invention, it is preferred that the aliphatic dibasic acid and/or aromatic dibasic acid, aliphatic diol, and optional hydroxycarboxylic acid are contained in an amount of 90% by mass or more, based on the total mass of the reaction raw materials, and it is more preferred that the reaction raw materials comprise only the aliphatic dibasic acid and/or aromatic dibasic acid, aliphatic diol, and optional hydroxycarboxylic acid.

The aliphatic dibasic acid used in the production of the polyester of the invention is an aliphatic dibasic acid corresponding to the aliphatic dibasic acid residue having 2 to 12 carbon atoms for A, A₁, A₂, and A₃, and the aliphatic dibasic acids may be used individually or in combination.

The aromatic dibasic acid used in the production of the polyester of the invention is an aromatic dibasic acid corresponding to the aromatic dibasic acid residue having 5 to 15 carbon atoms for A, A₁, A₂, and A₃, and the aromatic dibasic acids may be used individually or in combination.

The aliphatic diol used in the production of the polyester of the invention is an aliphatic diol corresponding to the aliphatic diol residue having 2 to 12 carbon atoms for G, G₁, and G₂, and the aliphatic diols may be used individually or in combination.

The hydroxycarboxylic acid used in the production of the polyester of the invention is a hydroxycarboxylic acid corresponding to the hydroxycarboxylic acid residue having 2 to 18 carbon atoms for L, and the hydroxycarboxylic acids may be used individually or in combination.

The reaction raw materials used also include a derivative of the above-mentioned ester compound, acid chloride, acid anhydride, or the like. For example, the hydroxycarboxylic acid also includes a compound having a lactone structure, such as ε-caprolactone.

The polyester of the invention can be produced by reacting an aliphatic dibasic acid and/or an aromatic dibasic acid, an aliphatic diol, and an optional hydroxycarboxylic acid, which constitute the residues of the polyester of the invention, under conditions such that the equivalent of the carboxyl group contained in the reaction raw materials is the same as or larger than the equivalent of the hydroxyl group.

The polyester of the invention can also be produced by reacting an aliphatic dibasic acid and/or an aromatic dibasic acid, an aliphatic diol, and an optional hydroxycarboxylic acid, which constitute the residues of the polyester of the invention, under conditions such that the equivalent of the hydroxyl group contained in the reaction raw materials is larger than the equivalent of the carboxyl group to obtain a polyester having a hydroxyl group at an end of the principal chain, and then further reacting the obtained polyester with an aliphatic dibasic acid and/or an aromatic dibasic acid.

The polyester of the invention is preferably a polyester using, as reaction raw materials, at least one aliphatic dibasic acid selected from the group consisting of succinic acid, sebacic acid, maleic acid, and an adipic acid residue, and at least one aliphatic diol selected from ethylene glycol, diethylene glycol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol, 2,2-diethyl-1,3-propanediol, 2-n-butyl-2-ethyl-1,3-propanediol, 3-methyl-1,5-pentanediol, 1,6-hexanediol, cyclohexanedimethanol, 2,2,4-trimethyl-1,3-pentanediol, 2-ethyl-1,3-hexanediol, 2-methyl-1,8-octanediol, and 1,9-nonanediol.

The polyester of the invention is more preferably a polyester using, as reaction raw materials, at least one aliphatic dibasic acid selected from the group consisting of succinic acid and sebacic acid, and at least one aliphatic diol selected from ethylene glycol, diethylene glycol, 1,2-propanediol, 1,3-propanediol, 1,6-hexanediol, 3-methyl-1,5-pentanediol, 1,4-butanediol, and 1,3-butanediol.

All of these reaction raw materials can be biomass-derived materials, and the obtained polyester can be a polyester having a biomass degree of 100%. The use of a polyester having a biomass degree of 100% as the biodegradable resin is preferred from the viewpoint of sustainability.

In the production of the polyester of the invention, with respect to the reaction for the reaction raw materials, an esterification reaction can be conducted, if necessary, in the presence of an esterification catalyst at a temperature, for example, in the range of from 180 to 250°C for a period of time in the range of from 10 to 25 hours.

With respect to the conditions for the esterification reaction, such as a temperature and a time, there is no particular limitation, and the conditions may be appropriately selected.

Examples of the esterification catalysts include titanium catalysts, such as tetraisopropyl titanate and tetrabutyl titanate; zinc catalysts, such as zinc acetate; tin catalysts, such as dibutyltin oxide; and organic sulfonic acid catalysts, such as p-toluenesulfonic acid.

The amount of the esterification catalyst used may be appropriately selected, but is generally in the range of from 0.001 to 0.1 parts by mass, relative to 100 parts by mass of the total of the reaction raw materials.

### [Biodegradable resin composition]

The biodegradable resin composition of the invention comprises the biodegradable resin degradation accelerator of the invention and a biodegradable resin. The biodegradable resin composition contains the biodegradable resin degradation accelerator of the invention, and therefore can further accelerate degradation of the biodegradable resin.

Further, the biodegradable resin degradation accelerator of the invention can function as a plasticizer for a biodegradable resin, and a molded article can be produced from the biodegradable resin composition of the invention without using a conventional plasticizer, such as a benzoate, a phthalate, or a pyromellitate.

With respect to the amount of the contained biodegradable resin degradation accelerator of the invention, there is no particular limitation, but, for example, the amount of the biodegradable resin degradation accelerator is in the range of from 1 to 250 parts by mass, preferably in the range of from 1 to 50 parts by mass, and more preferably in the range of from 1 to 30 parts by mass, relative to 100 parts by mass of the biodegradable resin.

Examples of biodegradable resins contained in the biodegradable resin composition of the invention include polylactic acid (PLA), polyethylene succinate (PES), polyethylene terephthalate-succinate (PETS), polybutylene succinate (PBS), polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate (PBSA), polybutylene succinate-carbonate (PEC), polybutylene succinate-adipate-terephthalate (PBSAT), polyethylene succinate-adipate-terephthalate (PESAT), polytetramethylene adipate-terephthalate (PTMAT), polyhydroxybutyric acid (PHB), polyhydroxybutyric acid-hydroxyhexanoic acid (PHBH), polycaprolactone (PCL), polycaprolactone-butylene succinate (PCLBS), and cellulose acetate.

The biodegradable resin used may be appropriately selected according to the intended use of the biodegradable resin composition, and the biodegradable resins may be used individually or in combination.

The biodegradable resin is preferably at least one member selected from the group consisting of polylactic acid, polybutylene succinate, polybutylene adipate terephthalate, polyhydroxybutyric acid-hydroxyhexanoic acid, polybutylene succinate adipate, and polyethylene terephthalate succinate.

The biodegradable resin composition of the invention may contain an inorganic filler.

With respect to the inorganic filler contained in the biodegradable resin composition of the invention, there is no particular limitation, and examples of inorganic fillers include calcium carbonate, talc, silica, alumina, clay, antimony oxide, aluminum hydroxide, magnesium hydroxide, hydrotalcite, calcium silicate, magnesium oxide, potassium titanate, barium titanate, titanium oxide, calcium oxide, magnesium oxide, manganese dioxide, boron nitride, and aluminum nitride.

The inorganic fillers may be used individually or in combination.

The inorganic filler is preferably at least one member selected from the group consisting of calcium carbonate, silica, alumina, aluminum hydroxide, barium titanate, talc, boron nitride, and aluminum nitride, more preferably at least one member selected from the group consisting of calcium carbonate, alumina, aluminum hydroxide, and talc.

With respect to the configuration of the inorganic filler, such as a particle diameter, a fiber length, and a fiber diameter, there is no particular limitation, and the configuration may be appropriately selected according to the intended use of the biodegradable resin composition. Further, with respect to the state of the surface treatment of the inorganic filler, there is no particular limitation, and the inorganic filler may have been subjected to surface modification with, for example, a saturated fatty acid according to the intended use of the biodegradable resin composition.

The amount of the inorganic filler contained is, for example, in the range of from 1 to 200 parts by mass, relative to 100 parts by mass of the biodegradable resin, and may be in the range of from 1 to 100 parts by mass, in the range of from 5 to 70 parts by mass, in the range of from 10 to 60 parts by mass, or in the range of from 15 to 55 parts by mass.

As mentioned above, the biodegradable resin degradation accelerator of the invention can function as a plasticizer, but the biodegradable resin composition of the invention may further contain a plasticizer other than the biodegradable resin degradation accelerator of the invention.

Examples of the plasticizers include benzoates, such as diethylene glycol dibenzoate; phthalates, such as dibutyl phthalate (DBP), di-2-ethylhexyl phthalate (DOP), diisononyl phthalate (DINP), diisodecyl phthalate (DIDP), diundecyl phthalate (DUP), and ditridecyl phthalate (DTDP); terephthalates, such as bis(2-ethylhexyl) terephthalate (DOTP); isophthalates, such as bis(2-ethylhexyl) isophthalate (DOIP); pyromellitates, such as tetra-2-ethylhexyl pyromellitate (TOPM); aliphatic dibasic acid esters, such as di-2-ethylhexyl adipate (DOA), diisononyl adipate (DINA), diisodecyl adipate (DIDA), di-2-ethylhexyl sebacate (DOS), and diisononyl sebacate (DINS); phosphates, such as tri-2-ethylhexyl phosphate (TOP) and tricresyl phosphate (TCP); alkyl esters of a polyhydric alcohol, such as pentaerythritol; a polyester having a molecular weight of 800 to 4,000 synthesized by forming a polyester from a dibasic acid, such as adipic acid, and a glycol; epoxidized esters, such as epoxidized soybean oil and epoxidized linseed oil; alicyclic dibasic acids, such as diisononyl hexahydrophthalate; fatty acid glycol esters, such as dicapric acid 1,4-butanediol; tributyl acetylcitrate (ATBC); a chlorinated paraffin obtained by chlorinating a paraffin wax or n-paraffin; chlorinated fatty acid esters, such as chlorinated stearate; and higher fatty acid esters, such as butyl oleate.

The plasticizer used may be appropriately selected according to the intended use of the biodegradable resin composition, and the plasticizers may be used individually or in combination.

With respect to the amount of the plasticizer contained, there is no particular limitation, but, for example, the amount of the plasticizer is preferably in the range of from 10 to 300 parts by mass, more preferably in the range of from 20 to 200 parts by mass, relative to 100 parts by mass of the biodegradable resin.

The additive contained in the biodegradable resin composition of the invention is not limited to the above-mentioned biodegradable resin degradation accelerator and plasticizer, and the biodegradable resin composition may contain an additive other than those mentioned above.

Examples of such other additives include a viscosity depressant, a flame retardant, a stabilizer, a stabilizing auxiliary, a colorant, a processing aid, a filler, an antioxidant, an ultraviolet light absorber, a light stabilizer, a lubricant, an antistatic agent, and a crosslinking auxiliary.

Further, the biodegradable resin composition of the invention may contain a nonbiodegradable resin in such an amount that the effects of the invention are not sacrificed.

With respect to the nonbiodegradable resin, there is no particular limitation, and examples of the nonbiodegradable resins include a polyolefin, a polyester, a polysulfide, polyvinyl chloride, a modified polysulfide, a silicone resin, a modified silicone resin, an acrylic urethane resin, an epoxy resin, a polyurethane, an acrylic resin, a polyester, and an unsaturated polyester.

### [Method for producing the biodegradable resin composition]

With respect to the method for producing the biodegradable resin composition of the invention, there is no particular limitation.

For example, the biodegradable resin composition can be obtained by a method in which a biodegradable resin, an inorganic filler, and a fluidity modifier, and, if necessary, a plasticizer and the above-mentioned other additive are melt-kneaded using a melt-kneading machine, such as a single-screw extruder, a twin-screw extruder, a Banbury mixer, a Brabender, or a certain type of kneader.

### [Molded article of the biodegradable resin composition]

The biodegradable resin composition of the invention can be subjected to molding by various types of molding methods which are applied to general-purpose plastics.

Examples of the molding methods include compression molding (compression molding, laminate molding, and stampable molding), injection molding, extrusion and coextrusion (film forming by an inflation method or a T-die method, laminate molding, pipe forming, electric wire/cable forming, and profile molding), hot press molding, blow molding (various types of blow molding), calender forming, solid forming (uniaxial orientation forming, biaxial orientation forming, rolling forming, orientation nonwoven fabric forming, heat forming (vacuum forming and air-pressure forming), plasticizing, powder molding (rotary molding), and various types of nonwoven fabric forming (such as a dry method, a bonding method, a spunlace method, and a spunbond method).

Injection molding, extrusion, compression molding, or hot press molding is preferably used. With respect to the specific form of the molded article, the molded article is preferably applied to a sheet, a film, or a container.

The above-obtained molded article may be subjected to fabrication. Examples of the fabrication include embossing, coating, bonding, printing, metalizing (such as plating), machining, and a surface treatment (such as an antistatic treatment, a corona discharge treatment, a plasma treatment, a photochromism treatment, physical vapor deposition, chemical vapor deposition, and coating).

The molded article obtained from the biodegradable resin composition of the invention can accelerate degradation of the molded article per se due to the biodegradable resin degradation accelerator of the invention, and can be advantageously used as a product having a relatively short product life, such as a disposable container.

The molded article obtained from the biodegradable resin composition of the invention is advantageously used in a wide variety of applications, such as packaging materials for packaging a liquid, a powder, or a solid, agricultural materials, and building materials.

Specific examples of applications include injection molded articles (e.g., trays for perishable food, containers for fast food, containers for coffee capsule, cutlery, and outdoor leisure products), extruded articles (e.g., a film, a sheet, a fishing line, a fishing net, a vegetation net, a sheet for fabrication, and a water retention sheet), and blow molded articles (such as a bottle).

The application of the molded article is not limited to those mentioned above, and the molded article can be used in a film for agricultural use, a coating material, a coating material for fertilizer, a pot for raising seedlings, a laminated film, a plate, an oriented sheet, a monofilament, nonwoven fabric, a flat yarn, a stable fiber, a crimped fiber, a ribbed tape, a split yarn, a composite fiber, a blown bottle, a shopping bag, a garbage bag, a compost bag, a cosmetic container, a detergent container, a bleaching agent container, a rope, a tying material, a sanitary cover stock material, an insulating box, a cushioning film, a multifilament, synthetic paper, and medical uses, such as a surgical thread, a suture, artificial bone, artificial skin, microcapsules, and a wound bandage.

### [Method for degrading a biodegradable resin]

By adding the biodegradable resin degradation accelerator of the invention to a biodegradable resin, it is possible to accelerate degradation of the biodegradable resin.

The type of the biodegradable resin, the amount of the biodegradable resin degradation accelerator added, and the like are the same as those described above in connection with the biodegradable resin composition of the invention.

The degradation acceleration effect can be obtained not only in the state of a composition containing the biodegradable resin degradation accelerator and the biodegradable resin, but also in the state of a molded article of the biodegradable resin composition containing the biodegradable resin and the biodegradable resin degradation accelerator.

The degradation acceleration effect can be obtained as long as the biodegradable resin degradation accelerator and the biodegradable resin are in the state of being mixed with each other, and degradation can be practiced in any environment. Accordingly, degradation can be practiced in any of an indoor place and an outdoor place (including inside soil and inside water).

Conditions for degradation (for example, a temperature and a humidity) may be appropriately selected according to the intended degradation rate.

Generally, degradation of a biodegradable resin is accelerated at a high temperature and at a high humidity, and therefore, when further accelerating the degradation of the biodegradable resin, the method for degrading a biodegradable resin of the invention is preferably conducted in an environment at a high temperature and at a high humidity.

### EXAMPLES

Hereinbelow, the invention will be described in more detail with reference to the following Examples and Comparative Examples.

The following Examples should not be construed as limiting the scope of the invention.

In the Examples of the invention, an acid value, a hydroxyl value, and a viscosity value are values evaluated by the following methods.

### <Measurement method for acid value>

An acid value was measured by the method in accordance with JIS K0070-1992.

### <Measurement method for hydroxyl value>

A hydroxyl value was measured by the method in accordance with JIS K0070-1992.

In the Examples of the invention, the number average molecular weight of the polyester is a value as determined by GPC measurement using a conversion calibration curve obtained from the standard polystyrene, and conditions for the measurement are as follows.

### [Conditions for GPC measurement]

Measuring apparatus: High-speed GPC apparatus "HLC-8320GPC", manufactured by Tosoh Corp.
Columns: "TSK GURDCOLUMN SuperHZ-L", manufactured by Tosoh Corp. + "TSK gel SuperHZM-M", manufactured by Tosoh Corp. + "TSK gel SuperHZM-M", manufactured by Tosoh Corp. + "TSK gel SuperHZ-2000", manufactured by Tosoh Corp. + "TSK gel SuperHZ-2000", manufactured by Tosoh Corp.
Detector: RI (differential refractometer)
Data processing: "EcoSEC Data Analysis version 1.07", manufactured by Tosoh Corp.
Column temperature: 40°C
Developing solvent: Tetrahydrofuran
Flow rate: 0.35 mL/minute
Sample for measurement: 7.5 mg of a sample was dissolved in 10 ml of tetrahydrofuran, and the resultant solution was subjected to filtration using a microfilter and used as a sample for measurement.
Sample amount per injection: 20 µl
Standard sample: In accordance with the manual for measurement of the above-mentioned "HLC-8320GPC", the below-shown monodisperse polystyrenes having known molecular weights were used.

### (Monodisperse polystyrenes)

"A-300", manufactured by Tosoh Corp.
"A-500", manufactured by Tosoh Corp.
"A-1000", manufactured by Tosoh Corp.
"A-2500", manufactured by Tosoh Corp.
"A-5000", manufactured by Tosoh Corp.
"F-1", manufactured by Tosoh Corp.
"F-2", manufactured by Tosoh Corp.
"F-4", manufactured by Tosoh Corp.
"F-10", manufactured by Tosoh Corp.
"F-20", manufactured by Tosoh Corp.
"F-40", manufactured by Tosoh Corp.
"F-80", manufactured by Tosoh Corp.
"F-128", manufactured by Tosoh Corp.
"F-288", manufactured by Tosoh Corp.

### (Synthesis Example 1: Synthesis of biodegradable resin degradation accelerator A)

800 g of sebacic acid, 392 g of 1,3-propylene glycol, and 0.07 g of tetraisopropyl titanate as an esterification catalyst were charged into a four-necked flask being equipped with a thermometer, a stirrer, and a reflux condenser and having an internal volume of two litters, and the temperature of the resultant mixture was stepwise increased to 220°C in a nitrogen gas flow while stirring and continuously removing the formed water. After the reaction, 117 g of maleic anhydride was further charged into the reaction vessel to complete the reaction at 120°C, obtaining a biodegradable resin degradation accelerator A (white solid; number average molecular weight: 1,700; acid value: 58; hydroxyl value: 65) that is a polyester of sebacic acid and 1,3-propylene glycol, which has at least one end capped by maleic anhydride.

### (Synthesis Example 2: Synthesis of biodegradable resin degradation accelerator B)

490 g of sebacic acid, 200 g of ethylene glycol, and 0.04 g of tetraisopropyl titanate as an esterification catalyst were charged into a four-necked flask being equipped with a thermometer, a stirrer, and a reflux condenser and having an internal volume of two litters, and the temperature of the resultant mixture was stepwise increased to 220°C in a nitrogen gas flow while stirring and continuously removing the formed water. After the reaction, 60 g of maleic anhydride was further charged into the reaction vessel to complete the reaction at 120°C, obtaining a biodegradable resin degradation accelerator B (white solid; number average molecular weight: 1,200; acid value: 64; hydroxyl value: 100) that is a polyester of sebacic acid and ethylene glycol, which has at least one end capped by maleic anhydride.

### (Synthesis Example 3: Synthesis of biodegradable resin degradation accelerator C)

490 g of sebacic acid and 150 g of ethylene glycol were charged into a four-necked flask being equipped with a thermometer, a stirrer, and a reflux condenser and having an internal volume of two litters, and the temperature of the resultant mixture was stepwise increased to 220°C in a nitrogen gas flow while stirring and continuously removing the formed water, obtaining a biodegradable resin degradation accelerator C (white solid; number average molecular weight: 1,200; acid value: 47; hydroxyl value: 47) that is a polyester of sebacic acid and ethylene glycol, which has a carboxyl group at least one end.

### (Synthesis Example 4: Synthesis of biodegradable resin degradation accelerator D)

1,618 g of sebacic acid, 815 g of 1,2-propylene glycol, and 0.15 g of tetraisopropyl titanate as an esterification catalyst were charged into a four-necked flask being equipped with a thermometer, a stirrer, and a reflux condenser and having an internal volume of three litters, and the temperature of the resultant mixture was stepwise increased to 220°C in a nitrogen gas flow while stirring and continuously removing the formed water. After the reaction, 230 g of maleic anhydride was further charged to complete the reaction at 120°C, obtaining a biodegradability accelerator D (pale yellow liquid; number average molecular weight: 1,300; acid value: 55; hydroxyl value: 68) that is a polyester of sebacic acid and 1,2-propylene glycol, which has at least one end capped by maleic anhydride.

### (Synthesis Example 5: Synthesis of biodegradable resin degradation accelerator E)

615 g of adipic acid, 460 g of 1,3-butanediol, 50 g of neopentyl glycol, and 0.10 g of tetraisopropyl titanate as an esterification catalyst were charged into a four-necked flask being equipped with a thermometer, a stirrer, and a reflux condenser and having an internal volume of two litters, and the temperature of the resultant mixture was stepwise increased to 220°C in a nitrogen gas flow while stirring and continuously removing the formed water. After the reaction, 45 g of maleic anhydride was further charged to complete the reaction at 120°C, obtaining a biodegradable resin degradation accelerator E (pale yellow liquid; number average molecular weight: 1,000; acid value: 30; hydroxyl value: 120) that is a polyester of adipic acid and 1,3-butanediol and neopentyl glycol, which has at least one end capped by maleic anhydride.

### (Synthesis Comparative Example 1: Synthesis of biodegradable resin degradation accelerator A')

263 g of adipic acid, 280 g of diethylene glycol monomethyl ether, 253 g of benzyl alcohol, and 0.04 g of tetraisopropyl titanate as an esterification catalyst were charged into a four-necked flask being equipped with a thermometer, a stirrer, and a reflux condenser and having an internal volume of two litters, and the temperature of the resultant mixture was stepwise increased to 220°C in a nitrogen gas flow while stirring and continuously removing the formed water. After the reaction, the resultant reaction mixture was subjected to vacuum evaporation at the same temperature, obtaining a biodegradable resin degradation accelerator A' (pale yellow liquid; number average molecular weight: 600; acid value: 0.5; hydroxyl value: 0.8) which is an ester compound corresponding to adipic acid having both ends capped by diethylene glycol monomethyl ether and benzyl alcohol.

### (Examples 1 to 4 and Comparative Examples 1 and 2: Preparation of PBS composition and evaluation thereof)

The components shown in Table 1 were kneaded by means of a mixer at 120°C for 15 minutes to prepare a biodegradable resin composition. With respect to the obtained biodegradable resin composition, the following evaluations were conducted. The results are shown in Table 1.

In Table 1, the polybutylene succinate used was "BioPBS FZ71PM", manufactured by PTT MCC Biochem Co., Ltd.

### (Biodegradability test)

The prepared biodegradable resin composition was dissolved in chloroform so that the nonvolatile content of the resultant solution became 7% by mass, and then the resultant chloroform solution was applied to a glass plate using an applicator (0.5 mm/wet).

The glass plate having a film applied thereonto was allowed to stand at room temperature overnight so that the film was dried. The dried film was cut into a size of 2 cm x 2 cm, obtaining a test specimen.

A glass bottle was filled with soil (water content: 30 wt%) gathered from a field in Ichihara city, Chiba prefecture, and the test specimen was buried in the soil. The bottle was closed with a cap and allowed to stand in a thermostatic chamber at 60°C for 4 weeks. With respect to the test specimen before and after allowed to stand, a change of the weight was measured, and a weight retention ratio (Weight of the test specimen after allowed to stand/Weight of the test specimen before allowed to stand x 100) was determined.

### (Plasticization test)

The obtained biodegradable resin composition was charged into Melt Indexer ("F-F01", manufactured by Toyo Seiki Seisaku-Sho, Ltd.; orifice inner diameter: 2.090 mm; cylinder temperature: 190°C), and a load of 1,000 g was applied to the composition and the composition was preheated for 4 minutes, and then a melt flow rate was measured.

**[Table 1]**

| | | Example 1 | Example 2 | Example 3 | Example 4 | Comparative Example 1 | Comparative Example 2 |
|---|---|---|---|---|---|---|---|
| Formulation [Parts by mass] | Polybutylene succinate | 100 | 100 | 100 | 100 | 100 | 100 |
| | Biodegradable resin degradation accelerator A | 10 | | | | | |
| | Biodegradable resin degradation accelerator B | | 10 | | | | 10 |
| | Biodegradable resin degradation accelerator C | | | 10 | | | |
| | Biodegradable resin degradation accelerator D | | | | 10 | | |
| | Biodegradable resin degradation accelerator A' | | | | | | 10 |
| Weight retention ratio [%] | | 52 | 55 | 65 | 60 | 97 | 80 |
| MFR [g/10 min.] | | 28 | 30 | 20 | 34 | 10 | 16 |

From the results shown in Table 1, it is found that, by adding a polyester having a carboxyl group at at least one end thereof to a biodegradable resin, degradation of polybutylene succinate which is the biodegradable resin is accelerated, and further a plasticizing effect can be obtained.

### (Examples 5 to 8 and Comparative Example 3: Preparation of PLA composition and evaluation thereof)

The components shown in Table 2 were kneaded by means of a mixer at 170°C for 15 minutes to prepare a biodegradable resin composition. With respect to the obtained biodegradable resin composition, the following evaluations were conducted. The results are shown in Table 2.

In Table 2, the polylactic acid used was "Luminy LX-175", manufactured by Total Corbion PLA Co., Ltd.

### (Biodegradability test)

The prepared biodegradable resin composition was dissolved in chloroform so that the nonvolatile content of the resultant solution became 7% by mass, and then the resultant chloroform solution was applied to a glass plate using an applicator (0.5 mm/wet).

The glass plate having a film applied thereonto was allowed to stand at 110°C for one hour so that the film was dried. The dried film was cut into a size of 2 cm x 2 cm, obtaining a test specimen.

A glass bottle was filled with soil (water content: 30 wt%) gathered from a field in Ichihara city, Chiba prefecture, and the test specimen was buried in the soil. The bottle was closed with a cap and allowed to stand in a thermostatic chamber at 60°C for 4 weeks. With respect to the polylactic acid in the test specimen before and after allowed to stand, a change of the number average molecular weight of the polylactic acid was measured, and a number average molecular weight retention ratio (Number average molecular weight of the polylactic acid after allowed to stand/Number average molecular weight of the polylactic acid before allowed to stand x 100) was determined.

Polylactic acid is insoluble in tetrahydrofuran, and therefore, in the measurement of a number average molecular weight in the present test, a sample for measurement was dissolved in chloroform, and data processing was conducted using "EcoSEC Data Analysis version 1.15", manufactured by Tosoh Corp.

### (Plasticization test)

The obtained biodegradable resin composition was charged into Melt Indexer ("F-F01", manufactured by Toyo Seiki Seisaku-Sho, Ltd.; orifice inner diameter: 2.090 mm; cylinder temperature: 190°C), and a load of 1,000 g was applied to the composition and the composition was preheated for 4 minutes, and then a melt flow rate was measured.

**[Table 2]**

| | | Example 5 | Example 6 | Example 7 | Example 8 | Comparative Example 3 |
|---|---|---|---|---|---|---|
| Formulation [Parts by mass] | Polylactic acid | 100 | 100 | 100 | 100 | 100 |
| | Biodegradable resin degradation accelerator B | 5 | | | | |
| | Biodegradable resin degradation accelerator C | | 5 | | | |
| | Biodegradable resin degradation accelerator D | | | 5 | | |
| | Biodegradable resin degradation accelerator E | | | | 5 | |
| Number average molecular weight retention ratio [%] | | 16 | 44 | 15 | 22 | 95 |
| MFR [g/10 min.] | | 20 | 24 | 19 | 19 | 11 |

From the results shown in Table 2, it is found that, by adding a polyester having a carboxyl group at at least one end thereof to a biodegradable resin, degradation of polylactic acid which is the biodegradable resin is accelerated, and further a plasticizing effect can be obtained.

### (Example 9 and Comparative Example 4: Preparation of PBAT composition and evaluation thereof)

The components shown in Table 3 were kneaded by means of a mixer at 130°C for 15 minutes to prepare a biodegradable resin composition. With respect to the obtained biodegradable resin composition, the following evaluations were conducted. The results are shown in Table 3.

In Table 3, the polybutylene adipate terephthalate used was "ecoflex", manufactured by BASF AG.

### (Biodegradability test)

30 g of soil (water content: 30 wt%) gathered from a field in Ichihara city, Chiba prefecture, and 30 mg of the biodegradable resin composition, which had been powdered by means of a cryogenic sample crusher ("JFC-300", manufactured by Japan Analytical Industry Co., Ltd.), were mixed together, and a glass container was filled with the resultant mixture. 5 mL of a 1 M sodium hydroxide solution as a carbon dioxide absorber was charged into the glass container, and then the glass container was sealed and allowed to stand in a thermostatic chamber at 30°C. After a lapse of 3 weeks, the unreacted sodium hydroxide was subjected to titration using a 0.1 M hydrochloric acid solution to determine the amount of carbon dioxide generated in the container (NaOH amount before the start of test - HCl amount needed for the titration).

With respect to the soil containing no biodegradable resin composition, the same procedure as mentioned above was performed to determine the amount of CO₂ generated, and the amount of CO₂ generated due to biodegradation (Amount of CO₂ generated (soil containing the biodegradable resin composition) - Amount of CO₂ generated (soil containing no biodegradable resin composition)) was determined by calculation. Then, a value of (Amount of CO₂ generated due to biodegradation/Amount of CO₂ (calculated value) generated when the biodegradable resin composition has been completely biodegraded) x 100 was determined and evaluated as a biodegradation rate.

### (Plasticization test)

The obtained biodegradable resin composition was charged into Melt Indexer ("F-F01", manufactured by Toyo Seiki Seisaku-Sho, Ltd.; orifice inner diameter: 2.090 mm; cylinder temperature: 190°C), and a load of 2,160 g was applied to the composition and the composition was preheated for 4 minutes, and then a melt flow rate was measured.

**[Table 3]**

| | | Example 9 | Comparative Example 4 |
|---|---|---|---|
| Formulation [Parts by mass] | Polybutylene adipate terephthalate | 100 | 100 |
| | Biodegradable resin degradation accelerator C | 10 | |
| Biodegradation rate [%] | | 11 | 2 |
| MFR [g/10 min.] | | 10 | 3 |

From the results shown in Table 3, it is found that, by adding a polyester having a carboxyl group at at least one end thereof to a biodegradable resin, degradation of polybutylene adipate terephthalate which is the biodegradable resin is accelerated, and further a plasticizing effect can be obtained.

### (Examples 10 to 12 and Comparative Example 5: Preparation of PHBV composition and evaluation thereof)

The components shown in Table 4 were allowed to stand at 80°C for one hour so that the components were miscible with one another, and then charged into a melt-kneading machine ("LABO PLASTOMILL", manufactured by Toyo Seiki Seisaku-Sho, Ltd.) and extruded at a kneading temperature of 175°C to prepare a biodegradable resin composition. With respect to the obtained biodegradable resin composition, the following evaluations were conducted. The results are shown in Table 4.

In Table 4, the poly(hydroxybutyrate-co-valerate) (PHBV) used was one which is manufactured by HighChem Co., Ltd.

### (Biodegradability test)

30 g of soil (water content: 30 wt%) gathered from a field in Ichihara city, Chiba prefecture, and 30 mg of the biodegradable resin composition, which had been powdered by means of a cryogenic sample crusher ("JFC-300", manufactured by Japan Analytical Industry Co., Ltd.), were mixed together, and a glass container was filled with the resultant mixture. 5 mL of a 1 M sodium hydroxide solution as a carbon dioxide absorber was charged into the glass container, and then the glass container was sealed and allowed to stand in a thermostatic chamber at 30°C. After a lapse of 3 weeks, the unreacted sodium hydroxide was subjected to titration using a 0.1 M hydrochloric acid solution to determine the amount of carbon dioxide generated in the container (NaOH amount before the start of test - HCl amount needed for the titration).

With respect to the soil containing no biodegradable resin composition, the same procedure as mentioned above was performed to determine the amount of CO₂ generated, and the amount of CO₂ generated due to biodegradation (Amount of CO₂ generated (soil containing the biodegradable resin composition) - Amount of CO₂ generated (soil containing no biodegradable resin composition)) was determined by calculation. Then, a value of (Amount of CO₂ generated due to biodegradation/Amount of CO₂ (calculated value) generated when the biodegradable resin composition has been completely biodegraded) x 100 was determined and evaluated as a biodegradation rate.

### (Plasticization test)

The obtained biodegradable resin composition was charged into Melt Indexer ("F-F01", manufactured by Toyo Seiki Seisaku-Sho, Ltd.; orifice inner diameter: 2.090 mm; cylinder temperature: 190°C), and a load of 2,160 g was applied to the composition and the composition was preheated for 4 minutes, and then a melt flow rate was measured.

**[Table 4]**

| | | Example 10 | Example 11 | Example 12 | Comparative Example 5 |
|---|---|---|---|---|---|
| Formulation [Parts by mass] | PHBV | 100 | 100 | 100 | 100 |
| | Biodegradable resin degradation accelerator C | 10 | | | |
| | Biodegradable resin degradation accelerator D | | 10 | | |
| | Biodegradable resin degradation accelerator E | | | 10 | |
| Biodegradation rate [%] | | 31 | 71 | 41 | 22 |
| MFR [g/10 min.] | | 4 | 8 | 5 | 2 |

From the results shown in Table 4, it is found that, by adding a polyester having a carboxyl group at at least one end thereof to a biodegradable resin, degradation of poly(hydroxybutyrate-co-valerate) which is the biodegradable resin is accelerated, and further a plasticizing effect can be obtained.

## Claims

1. A biodegradable resin degradation accelerator which is a polyester having a repeating unit represented by the following general formula (A) and a repeating unit represented by the following general formula (G), or a polyester having a repeating unit represented by the following general formula (L), a repeating unit represented by the following general formula (A), and a repeating unit represented by the following general formula (G), wherein the polyester has a carboxyl group at at least one end thereof: 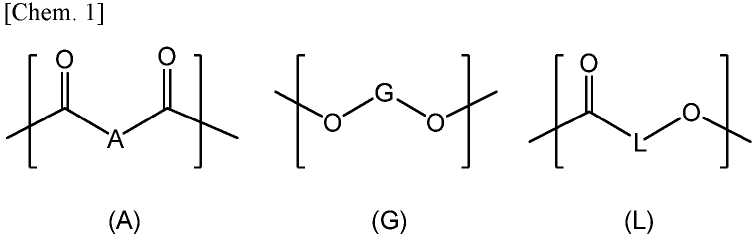 wherein, in the general formulae (A), (G), and (L),
A is an aliphatic dibasic acid residue having 0 to 12 carbon atoms or an aromatic dibasic acid residue having 5 to 15 carbon atoms,
G is an aliphatic diol residue having 2 to 12 carbon atoms, and
L is a hydroxycarboxylic acid residue having 2 to 18 carbon atoms.

2. The biodegradable resin degradation accelerator according to claim 1, wherein the polyester is a polyester represented by the following general formula (1) and/or a polyester represented by the following general formula (2): 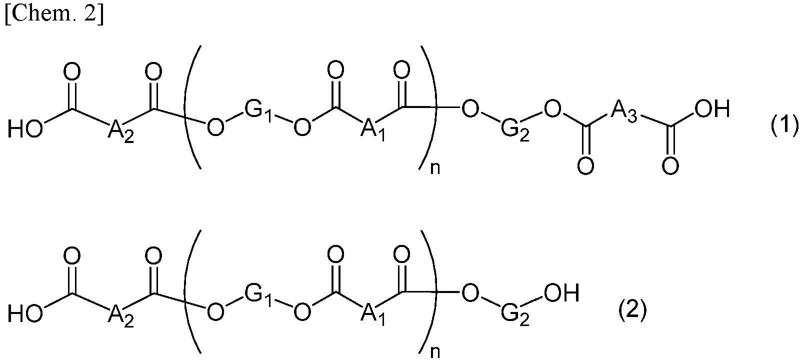 wherein, in the general formulae (1) and (2),
each of A₁, A₂, and A₃ is independently an aliphatic dibasic acid residue having 0 to 12 carbon atoms or an aromatic dibasic acid residue having 5 to 15 carbon atoms,
each of G₁ and G₂ is independently an aliphatic diol residue having 2 to 12 carbon atoms, and
n represents the number of repeating units, and is an integer in the range of from 0 to 20,
wherein A₁ and G₁ in a repeating unit in parentheses and those in another one are, respectively, the same or different.

3. The biodegradable resin degradation accelerator according to claim 1 or 2, wherein the aliphatic diol residue having 2 to 12 carbon atoms is a linear aliphatic diol residue having 2 to 12 carbon atoms.

4. The biodegradable resin degradation accelerator according to claim 1 or 2, wherein the polyester is in a solid state at room temperature.

5. The biodegradable resin degradation accelerator according to claim 1 or 2, wherein the polyester has an acid value of 25 or more.

6. The biodegradable resin degradation accelerator according to claim 1 or 2, wherein the polyester has a number average molecular weight in the range of from 300 to 5,000.

7. A biodegradable resin composition comprising a biodegradable resin and the biodegradable resin degradation accelerator according to claim 1 or 2.

8. The biodegradable resin composition according to claim 7, wherein the biodegradable resin is at least one member selected from the group consisting of polylactic acid, polybutylene succinate, polybutylene adipate terephthalate, polyhydroxybutyric acid-hydroxyhexanoic acid, polybutylene succinate adipate, and polyethylene terephthalate succinate.

9. The biodegradable resin composition according to claim 7, which contains 1 to 250 parts by mass of the biodegradable resin degradation accelerator, relative to 100 parts by mass of the biodegradable resin.

10. A molded article of the biodegradable resin composition according to claim 7.

11. A method for degrading a biodegradable resin, comprising adding the biodegradable resin degradation accelerator according to claim 1 or 2 to a biodegradable resin.
